# EUROPEAN PATENT SPECIFICATION

(11) **EP 1 723 182 B1**
(45) Date of publication and mention of the grant of the patent: **03.03.2010**
(21) Application number: 05726834.4
(22) Date of filing: 07.03.2005
(51) Int. Cl.: C08F 4/654, B01J 31/02

(54) **METHOD FOR PREPARING ETHYLENE POLYMERIZATION CATALYSTS**
VERFAHREN ZUR HERSTELLUNG VON ETHYLENPOLYMERISATIONSKATALYSATOREN
PROCEDE DE PREPARATION DE CATALYSEURS DE POLYMERISATION D'ETHYLENE

(30) Priority: 11.03.2004 KR 2004016604
(43) Date of publication of application: 22.11.2006
(73) Proprietor: SK Energy Co., Ltd., Seoul 110-110 (KR)
(72) Inventor: OK, Myung Ahn, Daejeon 305-340 (KR); SHIN, Dae Ho, Yuseong -gu, Daejeon 305-761 (KR); HAHN, Jong Sok, Yuseong -gu, Daejeon 305-761 (KR); LEE, Mal Woo, Daejeon 305-772 (KR); RYU, Seoung Woong, Daejeon 305-762 (KR)
(74) Representative: Stenger, Watzke & Ring
(86) International application number: PCT/KR2005/000631
(87) International publication number: WO 2005/087820

(56) References cited:
- KR-A- 20020 056 819
- KR-B1- 0 123 016
- KR-B1- 0 169 718
- US-A- 4 330 649
- US-A- 4 482 687
- XU JUNTING ET AL: "Roles of Grignard reagent in the Ziegler-Natta catalyst for propylene polymerization" 1 August 1997 (1997-08-01), J APPL POLYM SCI; JOURNAL OF APPLIED POLYMER SCIENCE AUG 1 1997 JOHN WILEY & SONS INC, NEW YORK, NY, USA, VOL. 65, NR. 5, PAGE(S) 925 - 930 , XP002483819 * the whole document *

## Description

### BACKGROUND OF THE INVENTION

### 1. Field of the Invention

The present invention relates to a method of preparing an ethylene polymerization catalyst. More particularly, the present invention pertains to a method of preparing an ethylene polymerization catalyst which is suitable for use in slurry polymerization in conjunction with a co-catalyst to homo-polymerize ethylene or co-polymerize ethylene and α-olefin having 3 to 8 carbons. Thus, high density polyethylene or medium density polyethylene, having a density of 0.935 or more, can be produced at high yield.

### 2. Description of the Related Art

Through gas or solution polymerization, medium density polyethylene having a density on the order of 0.930-0.945 g/cc and low density polyethylene having a density on the order of 0.920-0.930 g/cc are easily prepared. However, when ethylene and α-olefin are co-polymerized through slurry polymerization using an aliphatic hydrocarbon as a polymerization solvent in the presence of a Ziegler-Natta catalyst, the amount of wax component extracted or dissolved by the polymerization solvent is considerably increased in proportion to increasing the amounts of co-monomers. In addition, final polymer particles may agglomerate, resulting in clogged process lines. For the reason as described above, limitations are particularly imposed on the preparation of medium density polyethylene having densities of 0.945 g/cc or less. Further, the use of the Ziegler-Natta catalyst having non-uniform particles leads to non-uniform polymer particle morphology, decreasing the bulk density of the polymer.

Typically, ethylene polymerization has been industrially conducted in the presence of a Ziegler-Natta catalytic system comprising a main catalyst composed of a transition metal of Groups IVB to VIB in the periodic table and a co-catalyst having an organoaluminum compound. To prepare a catalyst exhibiting high activity for ethylene polymerization, methods of supporting halide of a transition metal, such as titanium tetrachloride, to magnesium chloride, have been commonly used.

In this regard, U.S. Patent No. 4,347,158 discloses a method of preparing a catalyst from magnesium chloride and titanium tetrachloride using a ball mill or vibration mill. In addition, U.S. Patent Nos. 4,071,674, 4,315,874, and 4,399,054 disclose a method of preparing a solid catalyst, by dissolving magnesium chloride in alcohol and then reacting it with a large amount of titanium tetrachloride.

However, since the catalyst thus obtained is in the form of non-uniform particles, the copolymer of ethylene and α-olefin obtained by slurry polymerization in the presence of the above catalyst also has non-uniform particle morphology, thus decreasing bulk density. As well, a soluble component extracted by the polymerization solvent may exist in a large quantity. Hence, the above catalyst is unsuitable for use in the preparation of medium density polyethylene having a density of 0.945 g/cc or less.

U.S. Patent No. 4,330,649 to Mitsui Petrochemical Co. Ltd., Japan, discloses that magnesium chloride is dissolved in 2-ethylhexylalcohol, and then re-precipitated in a large amount of titanium tetrachloride in the presence of an electron donor, to prepare a solid catalyst suitable for the production of medium density polyethylene through slurry polymerization. As such, the electron donor is exemplified by benzoic acid ethylester. Further, a method of using an electron donor such as alkyl phthalate to prepare a catalyst for improving the properties of the polymer is disclosed in U.S. Patent Nos. 4,847,227, 4,970,186, and 5,130,284. Furthermore, U.S. Patent Nos. 3,953,414 and 4,111,835 disclose a method of preparing a catalyst by spraying and drying a magnesium compound to form a spherical support.

However, the above methods are disadvantageous because the prepared catalyst has insufficient activity and unsatisfactory co-polymerizability. Also, the methods involve complicated preparation procedures, and may cause environmental problems due to the use of the large amount of titanium tetrachloride.

Meanwhile, In Korean Patent Laid-open No. 2002-56819, it is proposed that an electron donor such as phosphor or silane compound is reacted with an organic magnesium compound to prepare a catalyst, and alkyl halide is used upon polymerization to pre-activate the active polymerization sites in the catalyst, thereby broadening the molecular weight distribution. However, the above patent is disadvantageous in that because the use of the above catalyst results in solvent-extracted or dissolved wax components and agglomerated polymer particles, such a catalyst is unsuitable for preparation of medium density ethylene copolymer.

### SUMMARY OF THE INVENTION

Leading to the present invention, intensive and thorough research into polymerization catalysts, carried out by the present inventors aiming to avoid the problems encountered in the related art, led to the development of a method of preparing an ethylene polymerization catalyst that dramatically reduces a wax components extracted by a polymerization solvent, and that does not cause agglomeration of polymer particles when co-polymerizing ethylene and α-olefin through slurry polymerization, thus easily obtaining medium density polyethylene.

Accordingly, an object of the present invention is to provide a method of preparing an ethylene polymerization catalyst that can suppress the formation of active sites which causes the production of a polymer having a low molecular weight (especially, containing a large amount of co-monomer), among non-uniform active sites present in a Ziegler-Natta catalyst, whereby medium density polyethylene can be easily prepared at high yield through slurry polymerization.

Another object of the present invention is to provide a method of preparing an ethylene polymerization catalyst in the form of uniform particles, so that the resultant polymer has uniform particle morphology and thus has a high bulk density.

In order to accomplish the above objects, the present invention provides a method of preparing an ethylene polymerization catalyst, comprising
(a)
   (a1) reacting magnesium halide with alcohol in the presence of a hydrocarbon solvent,
   (a2) reacting the resulting product solution from the step (a1) with dialkylmagnesium, and
   (a3) reacting the resulting product from the step (a2) with alkyl halide or silane halide, to give a magnesium complex;
(b) reacting the magnesium complex with a titanium compound, to give a magnesium-titanium complex; and
(c) reacting the magnesium-titanium complex with an electron donor.

### DESCRIPTION OF THE PREFERRED EMBODIMENTS

Hereinafter, a detailed description will be given of the present invention.

According to the present invention, a method of preparing an ethylene polymerization catalyst is provided. In the presence of the ethylene polymerization catalyst of the present invention, ethylene may be homo-polymerized or ethylene and α-olefin may be co-polymerized through slurry polymerization to obtain high density or medium density polyethylene at high yield.

The ethylene polymerization catalyst of the present invention comprises powder type solid particles obtained by reacting a solid reaction product of magnesium halide (such as magnesium chloride), alcohol, an organic magnesium compound, and a halogen compound with a transition metal compound and an electron donor.

Specifically, the ethylene polymerization catalyst is prepared by contacting or reacting the following components:
[A] magnesium complex containing magnesium, halogen and alcohol(alkoxy) group
[B] tetravalent titanium compound
[C] electron door.

In the magnesium complex A, a molar ratio of Mg and halogen (such as Cl) ranges from 1:0.5 to 1:2, and a molar ratio of Mg and alkoxy group (or alcohol) ranges from 1:0.2 to 1:2. The magnesium complex A is prepared by forming a complex of magnesium halide (component 1) and alcohol (component 2) at an appropriate molar ratio, and then reacting the above complex with dialkylmagnesium (component 3) and alkyl halide or silane halide (component 4) at an appropriate molar ratio.

For example, a solution resulting from reacting magnesium halide with alcohol in the presence of a hydrocarbon solvent, is slowly reacted with dialkylmagnesium at -30 to 100°C, preferably 0 to 50°C, which is then slowly reacted with alkyl halide or silane halide at -30 to 100°C, preferably 0 to 50°C, thereby producing a magnesium complex A. If the reaction temperature is lower than -30°C, the reaction insufficiently occurs, and thus, the effects of adding the components are hardly attained. Meanwhile, if the temperature is higher than 100°C, it is difficult to uniformly form the catalyst particles due to the formation of precipitates, resulting in non-uniform polymer particle morphology.

The components 1, 2, 3 and 4 used for preparation of the magnesium complex A are particularly described, below.

### Component 1: Magnesium Halide represented by MgX₂

In the above formula, X is a halogen element belonging to Group VII in the periodic table, for example, Cl or Br. Magnesium halide is exemplified by anhydrous magnesium chloride. In particular, anhydrous magnesium chloride having a relatively large surface area, and preferably, 5 m²/g or more, is suitable for the formation of a desired magnesium-alcohol complex.

### Component 2: Aliphatic Alcohol represented by R¹OH

In the above formula, R¹ is an alkyl radical having 1 to 10 carbons. Examples of aliphatic alcohol are methyl alcohol ethyl alcohol, n-propyl alcohol, iso-propyl alcohol, n-butyl alcohol, iso-butyl alcohol, 2-butyl alcohol, n-pentyl alcohol, amyl alcohol, n-hexyl alcohol, n-heptyl alcohol, n-octyl alcohol, 2-ethylhexyl alcohol, etc. Preferably, methyl alcohol, ethyl alcohol or 2-ethylhexyl alcohol is used.

### Component 3: Dialkylmagnesium represented by MgR²R³ or MgR²R³ (AlR⁴₃)

In the above formula, R², R³, and R⁴, which are the same or different, respectively are an alkyl radical having 1 to 10 carbons. Examples of dialkylmagnesium are butylethylmagnesium and dibutylmagnesium.

Component 4: Alkyl Halide 4a represented by R⁵X or Silane Halide 4b represented by R⁵ₘSiX₄₋ₘ

In the above formula, R⁵ is an alkyl radical having 1 to 5 carbons, X is a halogen element (e.g., Cl, Br or I) belonging to Group VII in the periodic table, and m is an integer from 0 to 3. Examples of alkylhalide 4a are chloromethane, chloroethane, 1-chloropropane, 2-chloropropane, 1-chlorobutane, 2-chlorobutane, 1-chloro-2-methylpropane, 2-chloro-2-methylpropane, 1-chloropentane, 2-chloropentane, 3-chloropentane, 1-chJoro-2-methylbutane, 1-chloro-3-methylbutane, 2-chloro-2-methylbutane, 2-chloro-3-methylbutane, etc. In addition, examples of silane halide 4b are tetrachlorosilane, methyltrichlorosilane, dimethyldichlorosilane, trimethylchlorosilane, ethyltrichlorosilane, diethyldichlorosilane, triethylchlorosilane, propyltrichlorosilane, dipropyltrichlorosilane, tripropylchlorosilane, butylchlorosilane, trichlorosilane, tert-butyldimethylchlorosilane, pentylchlorosilane, etc.

The titanium compound B is a tetravalent titanium compound represented by TiX₄ (wherein X is a halogen element belonging to Group VII in the periodic table, such as Cl or Br, or an alkoxy radical, such as OC₂H₅, OC₃H₇, or OC₄H₉), and a preferable example thereof is titanium tetrachloride (TiCl₄).

The electron donor C is an organic acid ester compound represented by R⁶(COO)ₙR⁷ₘR⁸ₙ₋ₘ, wherein R⁶ is saturated hydrocarbons, unsaturated hydrocarbons, .. alicyclic hydrocarbons or aromatic hydrocarbons having 1 to 18 carbons; R⁷ and R⁸, which are the same or different, respectively are an alkyl radical having 1 to 18 carbons; and n and m, which are the same or different, respectively are an integer of 1 or 2 (m ≤ n). Examples of the organic acid ester compound are benzoic acid ethylester, and diisobutylphthalate.

In the preparation of the ethylene polymerization catalyst, the magnesium complex [A] produced as mentioned above is reacted with the titanium compound [B] preferably at -20 to 100°C to form a complex of magnesium compound and titanium compound (i.e., magnesium-titanium complex), to which the electron donor [C] is added for an additional reaction.

As such, a preferable molar ratio of the magnesium complex [A] and the titanium compound [B] ranges from 1:0.5 to 1:10, and more preferably, from 1:1 to 1:6. When the molar ratio is less than 0.5, it is difficult to sufficiently attain the catalytic activity. On the other hand, if the molar ratio exceeds 10, there is required an additional step for recovery of the excess remaining non-reactive titanium compound.

Further, a preferable molar ratio of magnesium complex [A] and electron donor [C] ranges from 1:0.01 to 1:0.5, and more preferably, 1:0.05 to 1:02. If the molar ratio is less than 0.01, a solvent-extracted component is produced in a large amount upon co-polymerization of ethylene and α-olefin, or polymer particles may agglomerate. On the other hand, if the molar ratio exceeds 0.5, the catalytic activity is significantly reduced.

The catalyst obtained by the method of the present invention can suppress the formation of active sites which causes the production of a polymer having a low molecular weight (especially, containing a large amount of co-monomer), among non-uniform active sites present in a Ziegler-Natta catalyst. As a result, when ethylene and α-olefin are co-polymerized through slurry polymerization in the presence of the catalyst of the present invention, wax component extracted by the polymerization solvent hardly exists, and the polymer particles do not agglomerate, thus easily obtaining medium density polyethylene or high density polyethylene at high yield. In addition, with the aim of preparing the catalyst in the form of uniform particles, the magnesium-alcohol complex is reacted with organic magnesium and alkyl halide (or silane halide) before being reacted with the titanium compound. Therefore, the resultant polymer has uniform particle morphology in the presence of the above catalyst, increasing the bulk density thereof.

A better understanding of the present invention may be obtained in light of the following examples which are set forth to illustrate, but are not to be construed to limit the present invention.

The solid catalytic components were analyzed in accordance with the following procedures.

### 1. Analysis of Mg, Al, Ti and Si Components

Amounts of Mg, Al, Ti and Si were analyzed using ICP (Inductively Coupled Plasma).

### 2. Analysis of Cl component

The amount of Cl was analyzed using combustion ion chromatography.

Various properties of an ethylene-α-olefin copolymer, resulting from slurry polymerization in the presence of the catalyst of the present invention, were measured in accordance with the following procedures.

### 1. Bulk Density

The bulk density was measured according to ASTM D 1895.

### 2. Melt Flow Index

The melt flow index was measured according to ASTM D 2839.

### 3. Density

The density was measured using a density gradient tube according to ASTM D 1505.

### 4. Hexane-Extracted Component

The prepared copolymer was weighed and then loaded into a Soxlet device using hexane as a solvent. After the solvent was refluxed for 8 hr, the copolymer was weighed again, and the difference in weight of the copolymer was measured, and thus, the amount of component extracted by hexane was determined.

### Example 1

### Preparation Of Solid Catalyst 1

A 500 ml glass reactor, equipped with a filter, was provided with a stirrer, and then sufficiently filled with nitrogen. Subsequently, 150 ml of purified n-decane and 7 g (73.7 mmol) of anhydrous magnesium chloride (MgCl₂, Toho Titanium Co.) were loaded into the reactor, to which 34.5 ml (221 mmol) of 2-ethylhexyl alcohol was slowly added in droplets while being stirred at room temperature. The temperature was increased to 130°C to melt the solid substances, thus obtaining a uniform reaction solution, which was then reacted while being stirred for an additional 2 hr. Thereafter, the temperature was decreased to 20-30°C, and 49 ml (73.7 mmol Mg) of butylethylmagnesium (Magala, 21 wt% n-heptane solution) was slowly added in droplets to the reaction solution for 30 min, and the reaction was carried out for an additional 1 hr. The slurry thus obtained was added with 15.4 ml (147.4 mmol) of butyl chloride (BuCl), and the reaction occurred at the same temperature for 1 hour. The temperature was decreased to 10°C, and the reaction solution was added with 24 ml (221 mmol) of titanium tetrachloride (TiCl₄), and then stirred at room temperature for 30 min. The temperature was increased to 80°C for 1 hour, and 1.1 g (7.37 mmol) of benzoic acid ethylester was added and then the temperature was increased to 90°C, after which the reaction was carried out at 90°C for 2 hr.

After the completion of the reaction, the operation of the stirrer was stopped to precipitate the slurry, and then the non-reacted supernatant was removed using the filter. Thereafter, the remaining portion was added with 150 ml of purified heptane, stirred for 15 min, and then the resulting supernatant was removed in the same manner as above to purify the solid substances. After the temperature was decreased to room temperature, the above purification was further performed twice using purified hexane.

Vacuum drying was conducted at room temperature for 2 hr, yielding pale yellow catalyst powder. The yield of the resulting catalyst was 28.6 g, in which the amounts of Mg and Ti were found to be 11.1 wt% and 5.1 wt%, respectively, and the amount of Cl was found to be 31.5 wt%, according to the component analysis.

The analytic results for the composition of the catalyst are given in Table 1, below.

### Preparation Of Ethylene Copolymer

Into a 2.0 L stainless reactor, 1.2 L of hexane and 1.5 mmol triethylaluminum (TEAL) were loaded, and the reaction temperature was increased to 65°C. The reaction solution was added with 15 mg of the catalyst, to which 500 ml of hydrogen were added. Shortly after 10 g of 1-butene was added to the above reaction solution, ethylene was supplied to initiate the polymerization. During the polymerization, the reactor was maintained at 70°C and at a pressure of 6 kg/cm² for 1 hr. After the completion of the polymerization, the resultant white polymer powder was separated from the polymer slurry and then dried using a vacuum oven at 60°C for 8 hr. The yield of the polymer was 251 g, and also, the bulk density and the melt flow index of the polymer were 0.27 g/cc and 2:7 g/10min, respectively. Further, the polymer had the density of 0.941 g/cc. The amount of hexane-extracted component was 1.4 wt%. The properties of the copolymer are summarized in Table 2, below.

### Example 2

A catalyst was prepared in the same manner as in Example 1, with the exception that butyl chloride was used in an amount of 7.7 ml (73.7 mmol). The analytic results for the composition of the catalyst are given in Table 1, below.

An ethylene copolymer was prepared in the same manner as in Example 1, withy the exception of using the catalyst prepared in the present example. The properties of the copolymer are summarized in Table 2, below.

### Reference Example 1

A catalyst was prepared in the same manner as in Example 1, with the exception that butyl chloride was not used. The analytic results for the composition of the catalyst are given in Table 1, below.

An ethylene copolymer was prepared in the same manner as in Example 1, with the exception of using the catalyst prepared in the present example. The properties of the copolymer are summarized in Table 2, below.

### Reference Example 2

A catalyst was prepared in the same manner as in Reference Example 1, with the exception that butylethyl magnesium was used in an amount of 24.5 ml (36.9 mmol Mg). The analytic results for the composition of the catalyst are given in Table 1, below.

An ethylene copolymer was prepared in the same manner as in Example 1, with the exception of using the catalyst prepared in the present example. The properties of the copolymer are summarized in Table 2, below.

### Example 3

### Preparation Of Solid Catalyst 2

A catalyst was prepared in the same manner as in Example 1, with the exception that methyltrichlorosilane (MeSiCl₃) was used, instead of BuCl.

That is, a 500 ml glass reactor, equipped with a filter, was provided with a stirrer, and then sufficiently filled with nitrogen. Subsequently, 150 ml of purified n-decane and 7 g (73.7 mmol) of anhydrous magnesium chloride were loaded into the reactor, to which 34.5 ml (221 mmol) of 2-ethylhexyl alcohol was slowly added in droplets while being stirred at room temperature. The temperature was increased to 130°C to melt the solid substances, thus obtaining a uniform reaction solution, which was then reacted while being stirred for an additional 2 hr. Thereafter, the temperature was decreased to 20-30°C, and 49 ml (73.7 mmol Mg) of butylethylmagnesium (Magala, 21 wt% n-heptane solution) was slowly added in droplets to the reaction solution for 30 min, and the reaction was carried out for an additional 1 hr. The slurry thus obtained was added with 8.6 ml (73.7 mmol) of methyltrichlorosilane, and the reaction was carried out at the same temperature for 1 hr. The temperature was decreased to 10°C, and the reaction solution was added with 24 ml (221 mmol) of titanium tetrachloride (TiCl₄), and then stirred at room temperature for 30 min. The temperature was increased to 80°C for 1 hour, and 1.1 g (7.37 mmol) of benzoic acid ethylester was added and then the temperature was increased to 90°C, after which the reaction is carried out at 90°C for 2 hr.

After the completion of the reaction, the operation of the stirrer was stopped to precipitate the slurry, and then the non-reacted supernatant was removed using the filter. Thereafter, the remaining portion was added with 150 ml of purified heptane, stirred for 15 min, and then the resulting supernatant was removed in the same manner as above to purify the solid substances. After the temperature was decreased to room temperature, the above purification was further performed twice using purified hexane.

Vacuum drying was conducted at room temperature for 2 hr, yielding pale yellow catalyst powder: The yield of the catalyst was 29.6 g, in which the amounts ofMg and Ti were found to be 10.6 wt% and 5.2 wt%, respectively, and the amounts of Si and Cl were found to be 2.4 wt% and 35.7 wt%, respectively, according to the component analysis.

The analytic results for the composition of the catalyst are given in Table 3, below.

### Preparation Of Ethylene Copolymer

An ethylene copolymer was prepared in the same manner as in Example 1, with the exception of using the catalyst obtained in the present example. The yield of the polymer was 237 g, and also, the bulk density and the melt flow index of the polymer were 0.28 g/cc and 2.3 g/10min, respectively. Further, the polymer had the density of 0.939 g/cc. The amount of hexane-extracted component was 1.1 wt%. The properties of the copolymer are summarized in Table 4, below.

### Example 4

A catalyst was prepared in the same manner as in Example 3, with the exception that butylethyl magnesium was used in an amount of 24.5 ml (36.9 mmol Mg). The analytic results for the composition of the catalyst are given in Table 3, below.

An ethylene copolymer was prepared in the same manner as in Example 3, with the exception of using the catalyst prepared in the present example. The properties of the copolymer are summarized in Table 4, below.

### Comparative Example 1

### Preparation Of Catalyst

The catalyst was prepared in the same manner as in Example 1, excepting that neither butylethyl magnesium nor butyl chloride was not employed.

That is, a 500 ml glass reactor, equipped with a filter, was provided with a stirrer, and then sufficiently filled with nitrogen. Subsequently, 150 ml of purified n-decane and 7 g (73.7 mmol) of anhydrous magnesium chloride were loaded into the reactor, to which 34.5 ml (221 mmol) of 2-ethylhexyl alcohol was slowly added in droplets while being stirred at room temperature. The temperature was increased to 130°C to melt the solid substances, thus obtaining a uniform reaction solution, which was then reacted while being stirred for an additional 2 hr. Thereafter, the temperature was decreased to 10°C, and the reaction solution was added with 24 ml (221 mmol) of titanium tetrachloride (TiCl₄) and stirred at room temperature for 30 min. The temperature was increased to 90°C for 1 hour, after which the reaction was carried out at 90°C for 2 hr.

After the completion of the reaction, the operation of the stirrer was stopped to precipitate the slurry, and then the non-reacted supernatant was removed using the filter. Thereafter, the remaining portion was added with 150 ml of purified heptane, stirred for 15 min, and then the resulting supernatant was removed in the same manner as above to purify the solid substances. After the temperature was decreased to room temperature, the above purification was further performed twice using purified hexane.

Vacuum drying was conducted at room temperature for 2 hr, yielding pale yellow catalyst powder. The yield of the catalyst was 12.6 g, in which the amounts of Mg and Ti were found to be 8.9 wt% and 4.6 wt%, respectively, and the amount of Cl was found to be 35.9 wt%, according to the component analysis.

The analytic results for the composition of the catalyst are given in Table 5, below.

### Preparation Of Ethylene Coplymer

An ethylene copolymer was obtained in the same manner as in Example 1, with the exception of using the catalyst prepared in the present comparative example. The yield of the vacuum dried copolymer was 150 g, and also, the bulk density and the melt flow index of the polymer were 0.19 g/cc and 1.3 g/10min, respectively. Further, the polymer had the density of 0.938 g/cc, with severely agglomerated particles. The amount of hexane-extracted component was 19.6 wt%. The properties of the copolymer are summarized in Table 6, below.

### Comparative Example 2

### Preparation Of Catalyst

A 500 ml glass reactor, equipped with a filter, was provided with a stirrer, and then sufficiently filled with nitrogen. Subsequently, 150 ml of purified n-decane and 7 g (73.7 mmol) of anhydrous magnesium chloride (MgCl₂, Toho Titanium Co.) were loaded into the reactor, to which 34.5 ml (221 mmol) of 2-ethylhexyl alcohol was slowly added in droplets while being stirred at room temperature. The temperature was increased to 130°C to melt the solid substances, thus obtaining a uniform reaction solution, which was then reacted while being stirred for an additional 2 hr. Thereafter, the temperature was decreased to 20-30°C, and 11.1 ml (88.4 mmol) of diethylaluminumchloride (Et₂AlCl) was slowly added in droplets to the reaction solution for 30 min, and the reaction is carried out for an additional 1 hour. The slurry thus obtained was maintained at 10°C, added with 24 ml (221 mmol) of titanium tetrachloride (TiCl₄), and stirred at room temperature for 30 min. The temperature was increased to 90°C for 1 hour, after which the reaction was carried out at 90°C for 2 hr.

After the completion of the reaction, the operation of the stirrer was stopped to precipitate the slurry, and then the non-reacted supernatant was removed using the filter. Thereafter, the remaining portion was added with 150 ml of purified heptane, stirred for 15 min, and then the resulting supernatant was removed in the same manner as above to purify the solid substances. After the temperature was decreased to room temperature, the above purification was further performed twice using purified hexane.

Vacuum drying was conducted at room temperature for 2 hr, yielding pale yellow catalyst powder. The yield of the catalyst was 17.5 g, in which the amounts of Mg and Ti were found to be 8.2 wt% and 3.9 wt%, respectively, and the amounts of Al and Cl were found to be 3.3 wt% and 34.9 wt%, respectively, according to the component analysis.

The analytic results for the composition of the catalyst are given in Table 5, below.

### Preparation Of Ethylene Copolymer

An ethylene copolymer was prepared in the same manner as in Example 1, with the exception of using the catalyst prepared in the present comparative example. The yield of the vacuum dried polymer was 132 g., In addition, the bulk density and the melt flow index of the polymer were 0.18 g/cc and 1.8 g/10min, respectively. Further, the polymer had the density of 0.941 g/cc, with severely agglomerated particles. The amount of hexane-extracted component was 22.0 wt%. The properties of the copolymer are summarized in Table 6, below.

### Comparative Example 3

### Preparation Of Catalyst

A 500 ml glass reactor, equipped with a filter, was provided with a stirrer, and then sufficiently filled with nitrogen. Subsequently, 150 ml of purified n-decane and 7 g (73.7 mmol) of anhydrous magnesium chloride (MgCl₂, Toho Titanium Co.) were loaded into the reactor, to which 34.5 ml (221 mmol) of 2-ethylhexyl alcohol was slowly added in droplets while being stirred at room temperature. The temperature was increased to 130°C to melt the solid substances, thus obtaining a uniform reaction solution, which was then reacted while being stirred for an additional 2 hr. Subsequently, the temperature was decreased to 20-30°C, and 11.1 ml (88.4 mmol) of diethylaluminumchloride (Et₂AlCl) was slowly added in droplets to the reaction solution for 30 min, and the reaction was carried out for an additional 1 hour. The slurry thus obtained was maintained at 10°C, added with 24 nil (221 mmol) of titanium tetrachloride (TiCl₄), and stirred at room temperature for 30 min. The temperature was increased to 80°C for 1 hour, and 1.1 g (7.37 mmol) of benzoic acid ethylester was added and the temperature was increased to 90°C, after which the reaction was carried out at 90°C for 2 hr.

After the completion of the reaction, the operation of the stirrer was stopped to precipitate the slurry, and then the non-reacted supernatant was removed using the filter. Thereafter, the remaining portion was added with 150 ml of purified heptane, stirred for 15 min, and then the resulting supernatant was removed in the same manner as above to purify the solid substances. After the temperature was decreased to room temperature, the above purification was further performed twice using purified hexane.

The resultant solid particles were transferred into a separate flask, and then vacuum dried at room temperature for 2 hr, yielding pale yellow catalyst powder. The yield of the catalyst was 17.1 g, in which the amounts of Mg and Ti were found to be 8.8 wt% and 4.1 wt%, respectively, and the amounts of Al and Cl were found to be 2.7 wt% and 34.3 wt%, respectively, according to the component analysis.

The analytic results for the composition of the catalyst are given in Table 5, below.

### Preparation Of Ethylene Copolymer

An ethylene copolymer was prepared in the same manner as in Example 1, with the exception of using the catalyst prepared in the present comparative example. The yield of the vacuum dried polymer was 97 g. In addition, the bulk density and the melt flow index of the polymer were 0.21 g/cc and 1.2 g/10mm, respectively. Further, the polymer had the density of 0.934 g/cc. The amount of hexane-extracted component was 8.5 wt%. The properties of the copolymer are summarized in Table 6, below.

**Table 1**

| | MgCl₂/2-EHA/MgR₂/BuCl/ EB/TiCl₄ (MolarRatio) | Catalyst Comp.(%) Mg/Ti/Cl | Catalyst Yield (%) (Based On MgCl₂) |
|---|---|---|---|
| Ex. 1 | 1/3/1.0/2/0.1/3 | 11.1/5.1/31.5 408 | |
| Ex. 2 | 1/3/1.0/1/0.1/3 | 10.3/5.3/31.6 | 398 |
| Ref. Ex. 1 | 1/3/1.0/0/0.1/3 | 95/6.1/30.8 | 318 |
| Ref. Ex 2 | 1/3/0.5/0/0.1/3 | 8.5/63/32.8 | 254 |

**Table 2**

| | Polymer Yield (g) | Activity (Kg-PE/ g-cat) | Bulk Density (g/cc) | MI (g/10min) | Density (g/cc) | Hexane-Extraeted Component(wt%) |
|---|---|---|---|---|---|---|
| Ex. 1 | 251 | 16.7 | 0.27 | 2.7 | 0.941 | 1.4 |
| Ex. 2 | 282 | 18.8 | 0.26 | 2.2 | 0.938 | 1.7 |
| Ref. Ex. 1 | 309 | 20.6 | 0.26 | 1.9 | 0.946 | 2.7 |
| Ref. Ex. 2 | 201 | 13.4 | 0.24 | 3.0 | 0.935 | 3.1 |

**Table 3**

| Ex. No. | MgCl₂/2-EHA/MgR₂/MeSiC₃/EB/TiCl₄ (Molar Ratio) | Catalyst Comp.(%) Mg/Ti/Si/Cl | Catalyst Yield (%) (Based On MgCl₂) |
|---|---|---|---|
| 3 | 1/3/1.0/1/0.1/3 | 10.6/5.2/2.4/35.7 | 422 |
| 4 | 1/3/0.5/1/0.1/3 | 9.7/5.3/2.7/38.7 | 256 |

**Table 4**

| Ex. No. | Polymer Yield (g) | Activity (Kg-PE/ g-cat) | Bulk Density (g/cc) | MI (g/10min) | Density (g/cc) | Hexane-Extracted Component(wt%) |
|---|---|---|---|---|---|---|
| 3 | 237 | 15.8 | 0.28 | 2.3 | 0.939 | 1.1 |
| 4 | 393 | 26.2 | 0.26 | 2.0 | 0.938 | 1.3 |

**Table 5**

| C.Ex. No. | MgCl₂/2-EHA/Et₂AlCl/EB/TiCl₄ (Molar Ratio) | Catalyst Comp.(%) Mg/Ti/Al/Cl | Catalyst Yield (%) (Based On MgCl₂) |
|---|---|---|---|
| 1 | 1/3/0.0/0.0/3 | 8.9/4.6/0.0/35.9 | 180 |
| 2 | 1/3/1.210.0/3 | 8.2/3.9/3.3/34.9 | 250 |
| 3 | 1/3/1.2/0.1/3 | 8.8/4.1/2.7/34.3 | 244 |

**Table 6**

| C.Ex. No. | Polymer Yield (g) | Activity (Kg-PE/g-cat) | Bulk Density (g/cc) | MI (g/10min) | Density (g/cc) | Hexane-Extracted Component(wt%) |
|---|---|---|---|---|---|---|
| 1 | 150 | 10.0 | 0.19 | 1.3 | 0.938 | 19.6 |
| 2 | 132 | 8.8 | 0.18 | 1.8 | 0.941 | 22.0 |
| 3 | 97 | 6.5 | 0.21 | 1.2 | 0.934 | 8.5 |

As is apparent from Tables 1 to 6, when ethylene is homo-polymerized or ethylene and α-olefin are co-polymerized through slurry polymerization in the presence of the catalyst prepared according to the method of the present invention, high density polyethylene having a density of 0.945 g/cc or more, or medium density polyethylene having a density of 0.930-0.945 g/cc can be easily prepared at high yield.

Before the magnesium-alcohol complex is reacted with the titanium compound, it is reacted with organic magnesium and alkyl halide (or silane halide) in advance, thereby improving the physical properties of the polymer. In addition, the catalyst of the present invention, which is merely pretreated with organic magnesium, results in a much smaller amount of hexane-extracted component and a higher bulk density, compared to the conventional catalysts.

Particularly, when medium density polyethylene is prepared through slurry polymerization in the presence of the inventive catalyst in the form of uniform particles, the resultant polymer has uniform particle morphology, thus further increasing bulk density, compared to the conventional Ziegler-Natta catalysts. As well, the solvent-extracted component exists in a dramatically decreased amount, and agglomeration of the polymer particles may be prevented.

As described above, the present invention provides a method of preparing an ethylene polymerization catalyst. The catalyst of the present invention is advantageous because it inhibits the formation of active sites which causes the production of a polymer having a low molecular weight (especially, containing a large amount of co-monomer), among non-uniform active sites present in a Ziegler-Natta catalyst. As a result, when the ethylene copolymer is prepared in the presence of the catalyst of the present invention, that is, when ethylene and α-olefin are co-polymerized by slurry polymerization in the presence of the above catalyst, the amount of wax component extracted by the polymerization solvent is very low, and the polymer particles do not agglomerate. In addition, medium density polyethylene or high density polyethylene is easily prepared at high yield. Further, the magnesium-alcohol complex is reacted with organic magnesium and alkyl halide (or silane halide) before being reacted with the titanium compound, so that the catalyst is prepared in the form of uniform particles. Thereby, the resultant polymer has uniform particle morphology, thus increasing bulk density.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method of preparing an ethylene polymerization catalyst, comprising:
(a)
(a1) reacting magnesium halide with alcohol in the presence of a hydrocarbon solvent,
(a2) reacting the resulting product solution from the step (a1) with dialkylmagnesium, and
(a3) reacting the resulting product from the step (a2) with alkyl halide or silane halide, to give a magnesium complex;
(b) reacting the magnesium complex with a titanium compound, to give a magnesium-titanium complex; and
(c) reacting the magnesium-titanium complex with an electron donor.

2. The method as set forth in claim 1, wherein the magnesium halide is a compound represented by a formula of MgX₂, in which X is a halogen element belonging to Group VII in the periodic table.

3. The method as set forth in claim 1, wherein the alcohol is a compound represented by a formula of R¹ OH, in which R¹ is an alkyl radical having 1 to 10 carbons.

4. The method as set forth in claim 1, wherein the dialkylmagnesium is a compound represented by a formula of MgR²R³ or MgR²R³ ·(AlR⁴₃), in which R², R³ and R⁴, which are the same or different, respectively are an alkyl radical having 1 to 10 carbons.

5. The method as set forth in claim 1, wherein the alkyl halide is a compound represented by a formula of R⁵X, in which R⁵ is an alkyl radical having 1 to 5 carbons, and X is a halogen element belonging to Group VII in the periodic table.

6. The method as set forth in claim 1, wherein the silane halide is a compound represented by a formula of R⁵ₘSiX₄₋ₘ, in which R⁵ is an alkyl radical having 1 to 5 carbons, X is a halogen element belonging to Group VII in the periodic table, and m is an integer ranging from 0 to 3.

7. The method as set forth in claim 1, wherein the titanium compound is a compound represented by a formula of TiX₄, in which X is a halogen element belonging to Group VII in the periodic table, or an alkoxy radical selected from among OC₂H₅, OC₃H₇ and OC₄H₉.

8. The method as set forth in claim 1, wherein the electron donor is an organic acid ester compound represented by a formula of R⁶(COO)ₙR⁷mR⁸ₙ₋ₘ, in which R⁶ is saturated hydrocarbons, unsaturated hydrocarbons, alicyclic hydrocarbons or aromatic hydrocarbons having 1 to 18 carbons, R⁷ and R⁸, which are the same or different, respectively are an alkyl radical having 1 to 18 carbons, and n and m, which are the same or different, respectively are an integer of 1 or 2 (m ≤ n).

9. The method as set forth in claim 1, wherein the steps (a2) and (a3) are carried out at -30 to 100°C.

10. The method as set forth in claim 1, wherein a molar ratio of the magnesium complex and the titanium compound ranges from 1:0.5 to 1:10.

11. The method as set forth in claim 1, wherein a molar ratio of the magnesium complex and the electron donor ranges from 1:0.01 to 1:0.5.

12. The method as set forth in claim 1, wherein the step (b) is carried out at -20 to 100°C.

## Patentansprüche

1. Ein Verfahren zur Herstellung eines Ethylenpolymerisationskatalysators, Folgendes umfassend:
(a)
(a1) Verreagieren von Magnesiumhalogenid mit Alkohol in Gegenwart eines Hydrocarbonlösungsmittels,
(a2) Verreagieren der aus Schritt (a1) entstandenen Produktlösung mit Dialkylmagnesium und
(a3) Verreagieren des aus Schritt (a2) entstandenen Produkts mit Alkylhalogenid oder Silanhalogenid, um einen Magnesiumkomplex zu erhalten,
(b) Verreagieren des Magnesiumkomplexes mit einer Titanverbindung, um einen Magnesium-Titan-Komplex zu erhalten, und
(c) Verreagieren des Magnesium-Titan-Komplexes mit einem Elektronendonator.

2. Verfahren nach Anspruch 1, wobei das Magnesiumhalogenid eine Verbindung ist, die durch die Formel MgX₂ dargestellt wird, wobei X ein Halogenelement ist, das im Periodensystem der Elemente zur Gruppe VII gehört.

3. Verfahren nach Anspruch 1, wobei der Alkohol eine Verbindung ist, die durch die Formel R¹OH dargestellt wird, wobei E¹ ein Alkylradikal mit 1 bis 10 Kohlenstoffatomen ist.

4. Verfahren nach Anspruch 1, wobei das Dialkylmagnesium eine Verbindung ist, die durch die Formel MgR²R³ oder MgR²R³(AlR⁴₃) dargestellt wird, wobei R², R³ und R⁴, die identisch oder verschieden sein können, jeweils ein Alkylradikal mit 1 bis 10 Kohlenstoffatomen sind.

5. Verfahren nach Anspruch 1, wobei das Alkylhalogenid eine Verbindung ist, die durch die Formel R⁵X dargestellt wird, wobei R⁵ ein Alkylradikal mit 1 bis 5 Kohlenstoffatomen und X ein Halogenelement ist, das im Periodensystem der Elemente zur Gruppe VII gehört.

6. Verfahren nach Anspruch 1, wobei das Silanhalogenid eine Verbindung ist, die durch die Formel R⁵ₘSiX₄₋ₘ dargestellt wird, wobei R⁵ ein Alkylradikal mit 1 bis 5 Kohlenstoffatomen ist, X ein Halogenelement ist, das im Periodensystem der Elemente zur Gruppe VII gehört, und m eine Ganzzahl von 0 bis 3 ist.

7. Verfahren nach Anspruch 1, wobei die Titanverbindung eine Verbindung ist, die durch die Formel TiX4 dargestellt wird, wobei X ein Element ist, das im Periodensystem der Elemente zur Gruppe VII gehört, oder ein Alkoxyradikal, das aus OC₂H₅, OC₃H₇, und OC₄H₉ ausgewählt wird.

8. Verfahren nach Anspruch 1, wobei der Elektronendonator eine organische Säureesterverbindung ist, die durch die Formel R⁶ (COO)ₙR⁷R⁸ₙ₋ₘ dargestellt wird, wobei R⁶ gesättigte Kohlenwasserstoffe, ungesättigte Kohlenwasserstoffe, alizyklische Kohlenwasserstoffe oder aromatische Kohlenwasserstoffe mit 1 bis 18 Kohlenstoffatomen sind, R⁷ und R⁸, die identisch oder verschieden sind, jeweils ein Alkylradikal mit 1 bis 18 Kohlenstoffatomen sind und n und m, die identisch oder verschieden sind, jeweils eine Ganzzahl aus 1 oder 2 (m ≤ n) sind.

9. Verfahren nach Anspruch 1, wobei die Schritte (a2) und (a3) bei -30 bis 100 °C ausgeführt werden.

10. Verfahren nach Anspruch 1, wobei ein molares Verhältnis des Magnesiumkomplexes und der Titanverbindung im Bereich von 1:0,5 bis 1:10 liegt.

11. Verfahren nach Anspruch 1, wobei ein molares Verhältnis des Magnesiumkomplexes und des Elektronendonators im Bereich von 1:0,01 bis 1:0,5 liegt.

12. Verfahren nach Anspruch 1, wobei der Schritt (b) bei -20 bis 100 °C ausgeführt wird.

## Revendications

1. Procédé de préparation d'un catalyseur de polymérisation de l'éthylène, comprenant :
(a)
(a1) la mise en réaction d'halogénure de magnésium avec de l'alcool en présence d'un solvant hydrocarboné,
(a2) la mise en réaction de la solution de produit obtenu d'après l'étape (a1) avec du dialkylmagnésium, et
(a3) la mise en réaction du produit obtenu d'après l'étape (a2) avec de l'halogénure d'alkyle ou de l'halogénure de silane, pour donner un complexe magnésium ;
(b) la mise en réaction du complexe magnésium avec un composé de titane, pour donner un complexe magnésium-titane ; et
(c) la mise en réaction du complexe magnésium-titane avec un donneur d'électrons.

2. Procédé tel que décrit dans la revendication 1, dans lequel l'halogénure de magnésium est un composé représenté par une formule de MgX₂, dans laquelle X est un élément halogène appartenant au Groupe VII du tableau périodique des éléments.

3. Procédé tel que décrit dans la revendication 1, dans lequel l'alcool est un composé représenté par une formule de R¹OH, dans laquelle R¹ est un radical alkyle ayant 1 à 10 atomes de carbone.

4. Procédé tel que décrit dans la revendication 1, dans lequel le dialkylmagnésium est un composé représenté par une formule de MgR²R³ ou MgR²R³ · (AlR⁴₃), dans laquelle R², R³ et R⁴, identiques ou différents, sont respectivement un radical alkyle ayant 1 à 10 atomes de carbone.

5. Procédé tel que décrit dans la revendication 1, dans lequel l'halogénure d'alkyle est un composé représenté par une formule de R⁵x, dans laquelle R⁵ est un radical ayant 1 à 5 atomes de carbone, et X est un élément halogène appartenant au Groupe VII du tableau périodique des éléments.

6. Procédé tel que décrit dans la revendication 1, dans lequel l'halogénure de silane est un composé représenté par une formule de R⁵ₘSiX₄₋ₘ, dans laquelle R⁵ est un radical alkyle ayant 1 à 5 atomes de carbone, X est un élément halogène appartenant au Groupe VII du tableau périodique des éléments, et m est un nombre entier allant de 0 à 3.

7. Procédé tel que décrit dans la revendication 1, dans lequel le composé de titane est un composé représenté par une formule de TiX₄, dans laquelle X est un élément halogène appartenant au Groupe VII du tableau périodique des éléments, ou un radical alcoxy choisi parmi OC₂H₅, OC₃H₇ et OC₄H₉.

8. Procédé tel que décrit dans la revendication 1, dans lequel le donneur d'électrons est un composé ester d'acide organique représenté par une formule de R⁶(COO)ₙR⁷ₘR⁸ₙ₋ₘ, dans laquelle R⁶ sont des hydrocarbures saturés, des hydrocarbures insaturés, des hydrocarbures alicycliques ou des hydrocarbures aromatiques ayant 1 à 18 atomes de carbone, R⁷ et R⁸, identiques ou différents, sont respectivement un radical alkyle ayant 1 à 18 atomes de carbone, et n et m, identiques ou différents, sont respectivement un nombre entier égal à 1 ou 2 (m ≤ n).

9. Procédé tel que décrit dans la revendication 1, dans lequel les étapes (a2) et (a3) sont effectuées entre - 30 et 100 °C.

10. Procédé tel que décrit dans la revendication 1, dans lequel le rapport molaire du complexe magnésium et du composé de titane est compris entre 1:0,5 et 1:10.

11. Procédé tel que décrit dans la revendication 1, dans lequel le rapport molaire du complexe magnésium et du donneur d'électrons est compris entre 1:0,01 et 1:0,5.

12. Procédé tel que décrit dans la revendication 1, dans lequel l'étape (b) est effectuée entre -20 °C et 100 °C.
